# EUROPEAN PATENT APPLICATION

(11) **EP 1 447 808 A2**
(43) Date of publication of application: **18.08.2004**
(21) Application number: 04001815.2
(22) Date of filing: 28.01.2004
(51) Int. Cl.: G11B 33/04

(54) **Storage case**

(30) Priority: 12.02.2003 JP 2003033256
(71) Applicant: MK CORPORATION, Tokyo 174-0056 (JP)
(72) Inventor: Haruhiko, Maehara, Itabashi-ku, Tokyo 174-0056 (JP)
(74) Representative: Grünecker, Kinkeldey, Stockmair & Schwanhäusser Anwaltssozietät

(57) **Abstract**

A storage case that stores a disk, such as a compact disk, in a medium storage section of the body thereof includes a storage state determining section that allows the presence or absence of the disk to be identified by the sense of touch from the outside. The storage state determining section is formed by providing the storage case with a movable section such that a projection piece rises or sets through a window section provided on a side surface of the storage case body in accordance with the presence or absence of the disk within the storage case body.

## Description

### BACKGROUND OF THE INVENTION

### 1. Field of the Invention

The present invention relates a storage case for storing an information recording medium, such as a compact disk for music, digital video disk, or disk for computer programs.

### 2. Description of the Related Art

In general, the information recording medium, such as a compact disk for music, is retained in a state of being stored in a storage case. It is difficult to make a visual identification from outside such a storage case as to whether an information recording medium is stored within the storage case. With this being the situation, for example, Japanese Unexamined Patent Application Publication No. 2000-191072 (Paragraph 0018 and Figs. 1 to 6) discloses a storage case for solving the above-described problem.

The storage case set forth in the above-described patent document is arranged so that the display on a window section is visually changed in accordance with the presence or absence of an information recording medium in a storage section by means of color coding or a light-emitting display element, whereby a user can make a visual identification of the presence or absence of the information recording medium from the outside.

However, in such a method in which it is identified by visual check whether an information recording medium is stored, it is difficult for a visually impaired person to identify whether an information recording medium is stored when using such a storage case. Therefore, there has been the demand to identify whether an information recording medium is stored, using a method other than such methods based on visual identification. In addition, the above-described conventional art has another problem in that, even an able-bodied person cannot identify whether an information recording medium is stored when attempting to put in or take out a compact disk or the like in a state where the person cannot turn the person's eyes toward the storage case, e.g., when driving a car.

### SUMMARY OF THE INVENTION

Accordingly, it is an object of the present invention to provide a storage case for an information recording medium, the storage case allowing the presence or absence of the information medium in the storage case to be identified from the outside based on the rising or setting of a projection piece.

To solve the above-described problems, the present invention provides a storage case that is formed of a body of the storage case and a lid so that the lid is openable/closable with respect to the body of the storage case, and in the body of which an information recording medium is to be stored in a medium storage section, the storage case including a storage state determining section that allows the presence or absence of the information recording medium to be identified based on the rising or setting of a projection piece.

In the storage case according to the present invention, it is preferable that the storage state determining section include a window section that is a hole provided in the outside of the body of the storage case; a movable section turnably supported in the body of the storage case, the movable section having a contact piece formed at its front end on the medium storage section side, and having a projection piece formed at its front end on the window section side; and a urging section for resiliently urging the contact piece of the movable section to position on the medium storage section side. In this storage case, when the information recording medium is taken out of the medium storage section, the contact piece of the movable section resiliently urged by the urging section enters the medium storage section, and simultaneously the projection piece projects through the window section. On the other hand, when the information recording medium is put into the medium storage section, the contact piece of the movable section is pushed out by the information recording medium, and simultaneously the projection piece is pulled in through the window section.

In the storage case according to the present invention, it is preferable that a rotating shaft be pivoted to the movable section so that the length from the rotating shaft to the contact piece is less than that from the rotating shaft to the projection piece, and that the moving amount of the projection piece be arranged to increase in proportion to the moving amount of the contact piece.

In the storage case according to the present invention, the window section may be provided in a side surface of the body of the storage case, on the side of the opening portion between the body of the storage case and the lid.

In the storage case according to the present invention, the window section may also be provided in the side surface of the body of the storage case, on the side of the turning portion between the body of the storage case and the lid.

### BRIEF DESCRIPTION OF THE DRAWINGS

Fig. 1 is a constructional view of a storage case according to a first embodiment of the present invention;
Figs. 2A and 2B are enlarged constructional views of a storage state determining section, wherein Figs. 2A and 2B, respectively, show the storage state determining section when no disk is stored and that when a disk is stored;
Fig. 3 is a constructional view of a storage case according to a second embodiment of the present invention; and
Figs. 4A and 4B are enlarged constructional views of a storage state determining section, wherein Figs. 4A and 4B, respectively, show the storage state determining section when no disk is stored and that when a disk is stored.

### DESCRIPTION OF THE PREFERRED EMBODIMENTS

### First Embodiment

Hereinafter, a storage case according to a first embodiment of the present invention will be described with reference to accompanying drawings.

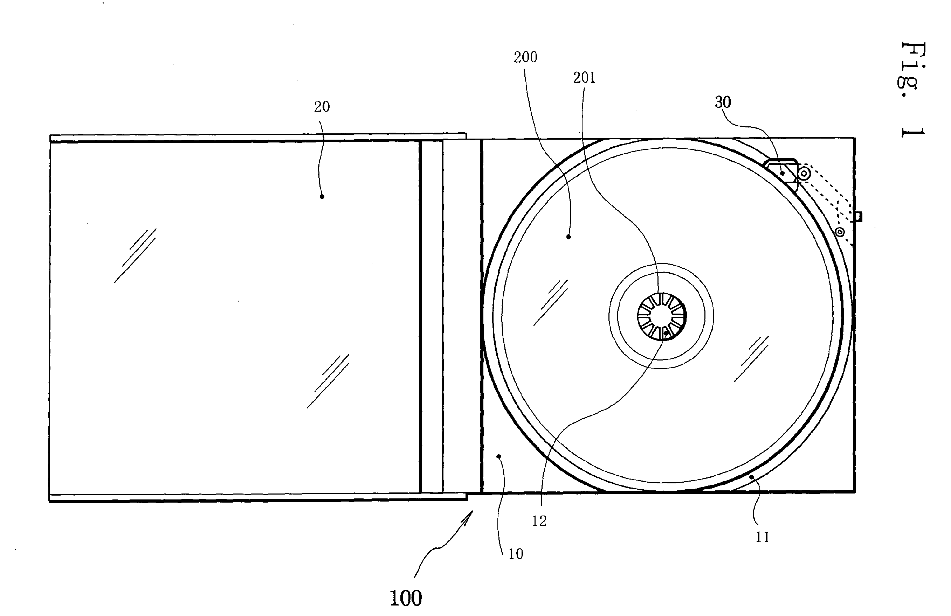

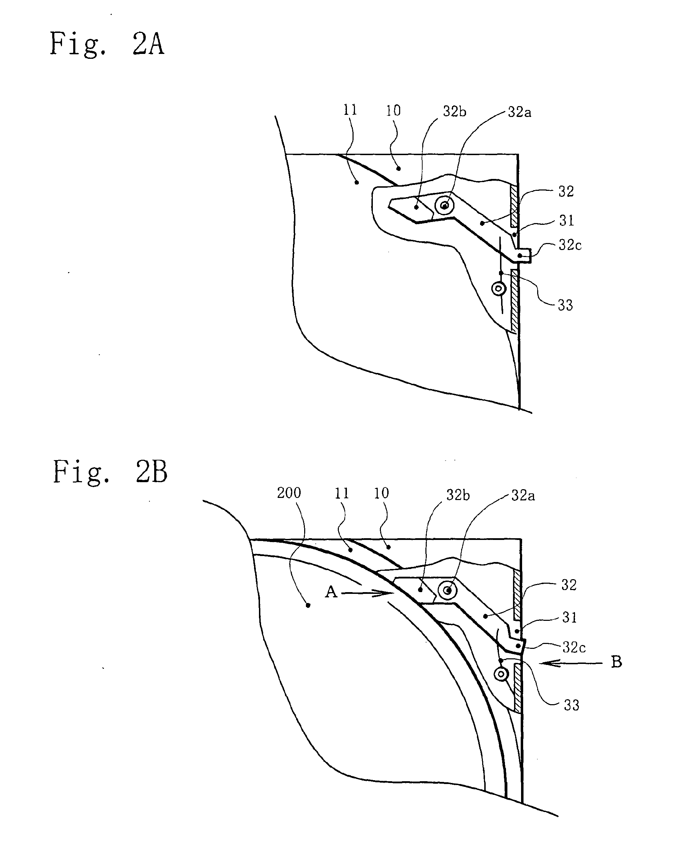

Fig. 1 is a constructional view of the storage case according to the first embodiment. Figs. 2A and 2B are enlarged constructional views of a storage state determining section, wherein Figs. 2A and 2B, respectively, show the storage state determining section when no disk is stored and that when a disk is stored.

Referring to Fig. 1, the storage case 100 comprises a storage case body 10 and a lid 20. The lid 20 is provided so as to be openable/closable with respect to the storage case body 10. The storage case 100 stores a disk (e.g., compact disk) 200 as a concrete example of an information recording medium.

A medium storage section 11 of the storage case body 10 has a leaf-spring shape clamp section 12, onto which a center hole 201 of the disk 200 is slid.

A storage state determining section 30 is provided in the vicinity of the medium storage section 11. As shown in Figs. 2A and 2B, the storage state determining section 30 includes a window section 31, movable section 32, and urging section 33.

The window section 31 is a hole provided in a side surface of the storage case body 10 (a side surface of the storage case body 10, on the side of the opening portion between the storage case body 10 and the lid 20).

The movable section 32 is turnably supported by a rotating shaft 32a in the storage case body 10. A contact piece 32b is formed at the front end of the movable section 32 on the medium storage section 11 side. On the other hand, a projection piece 32c is formed at the front end of the movable section 32 on the window section 31 side.

The urging section 33 is for resiliently urging the contact piece 32b of the movable section 32 to position on the medium storage section 11 side.

Next, descriptions will be made of the storing of the disk 200 by the storage case having such a storage state determining section 30.

When the disk becomes absent in the medium storage section 11 with the disk 200 taken out of the medium storage section 11, as shown in Fig. 2A, the contact piece 32b of the movable section 32 moves into the medium storage section 11 under a resilient urging force of the urging section 33 and becomes stabilized. At this time, the projection piece 32c is projected through the window section 31. Hence, it can be determined that the medium storage section 11 is in a state of being empty of the disk 200 when the projection piece 32c is projected.

On the other hand, when the disk becomes present in the medium storage section 11 with the disk 200 put into the medium storage section 11, as shown in Fig. 2B, the contact piece 32b of the movable section 32 is pushed out by the peripheral portion of the disk 200 and moves along the direction of the arrow A in Fig. 2B against the resilient urging force of the urging section 33. As a result, the movable section 32 rotates about the rotating shaft 32a, and the projection piece 32c is pulled in through the window section 31 along the direction of the arrow B in Fig. 2B. Hence, it can be determined that the medium storage section 11 is in a state of being loaded with the disk 200 when the projection piece 32c is not projected.

In this movable section 32, the rotating shaft 32a is positioned so that the length from the rotating shaft 32a to the contact piece 32b is less than that from the rotating shaft 32a to the projection piece 32c. When the contact piece 32b of the movable section 32 is pushed out by the disk 200 and moves, because the movable section 32 has the function of increasing the moving amount of the projection piece 32c in accordance with a proportionality rule, the moving amount of the projection piece 32c can be made large enough for the presence of the disk 200 to be identified, as can be seen from Figs. 2A and 2B.

Even when the lid 20 of the storage case 100 is closed, the use of the storage case 100 makes it possible to determine whether the disk 200 is present within the storage case 100 based on the rising or setting of the projection piece 32c.

A user, therefore, can identify, by the sense of touch or sight, whether the projection piece 32c is projected through the window section 31, or is sunk inside.

By virtue of this feature, for example, a visually impaired person can easily identify whether the disk 200 is stored within the storage case 100 by touching the window section 31 (projection piece 32c) from the outside.

### Second Embodiment

A storage case according to a second embodiment of the present invention will now be described.

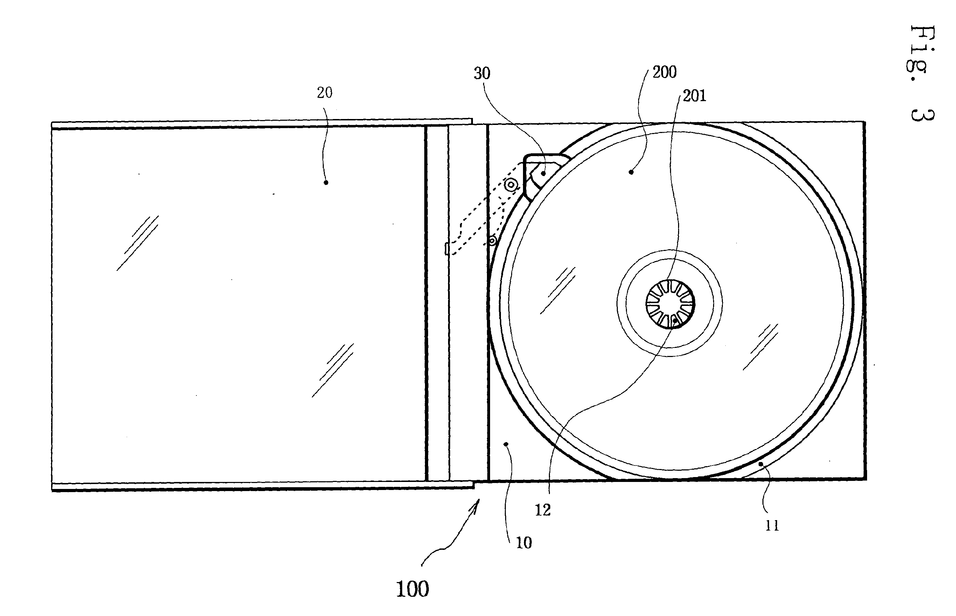

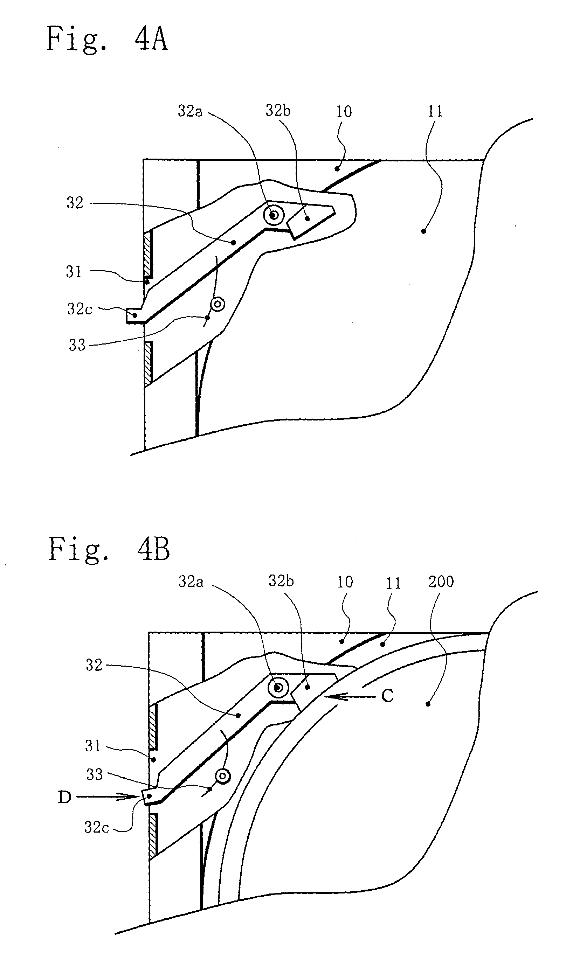

Fig. 3 is a constructional view of the storage case according to the second embodiment. Figs. 4A and 4B are enlarged constructional views of a storage state determining section, wherein Figs. 4A and 4B, respectively, show the storage state determining section when no disk is stored and that when a disk is stored.

The storage case according to the second embodiment shown in Figs. 3 and 4 is characterized by a position of the storage state determining section 30 different from that in the first embodiment. The same components as those in the first embodiment are designated by the same reference numerals, and are omitted from detailed descriptions.

Referring to Fig. 3, the storage case 100 comprises a storage case body 10 and a lid 20. The storage case 100 stores a disk 200. A storage state determining section 30 is provided in the vicinity of a medium storage section 11.

As shown in Figs. 4A and 4B, the storage state determining section 30 includes a window section 31, movable section 32, and urging section 33. In the first embodiment, the window section 31 is provided in a side surface of the storage case body 10, on the side of the opening portion between the storage case body 10 and the lid 20.
Differently from the case of the first embodiment, the window section 31 in this second embodiment is formed in the side surface of the storage case body 10, on the side of the turning portion between the storage case body 10 and the lid 20.

Next, descriptions will be made of the storing of the disk 200 by the storage case having such a storage state determining section 30.

When the disk becomes absent in the medium storage section 11 with the disk 200 taken out of the medium storage section 11, as shown in Fig. 4A, the contact piece 32b of the movable section 32 moves into the medium storage section 11 under a resilient urging force of the urging section 33 and becomes stabilized there. At this time, the projection piece 32c is projected through the window section 31. Hence, it can be determined that the medium storage section 11 is in a state of being empty of the disk 200 when the projection piece 32c is projected.

On the other hand, when the disk becomes present in the medium storage section 11 with the disk 200 put into the medium storage section 11, as shown in Fig. 4B, the contact piece 32b of the movable section 32 is pushed out by the peripheral portion of the disk 200 and moves along the direction of the arrow C in Fig. 4B against the resilient urging force of the urging section 33. As a result, the movable section 32 rotates about the rotating shaft 32a, and the projection piece 32c is pulled in through the window section 31 along the direction of the arrow D in Fig. 4B. Hence, it can be determined that the medium storage section 11 is in a state of being loaded with the disk 200 when the projection piece 32c is not projected.

In this movable section 32, the rotating shaft 32a is positioned so that the length from the rotating shaft 32a to the contact piece 32b is less than that from the rotating shaft 32a to the projection piece 32c. When the contact piece 32b of the movable section 32 is pushed out by the disk 200 and moves, because the movable section 32 has the function of increasing the moving amount of the projection piece 32c in accordance with a proportionality rule, the moving amount of the projection piece 32c can be made large enough for the presence of the disk 200 to be identified, as can be seen from Figs. 4A and 4B.

In this embodiment also, therefore, it can be identified whether the disk 200 is stored based on the rising or setting of the projection piece 32c through the window section 31, thus allowing the identification by the sense of touch.

The position of the window section 31 through which the projection piece 32 rises or sets, and consequently, the position of the movable section may be either of the two other side surfaces of the storage case body 10.

In each of the above-described embodiments, sticking a tape or seal on which contents stored in the disk 200 (album titles, player names, movie titles, computer program names, etc.) are displayed in Braille characters, on the surface of the lid 20 or on the side surface on the turning portion side (i.e., the surface in which the window section 31 shown in Figs. 4A and 4B is formed), allows a storage case that is more convenient and useful for a visually impaired person to be provided.

As is evident from the foregoing, according to the present invention, it is possible to provide a storage case that is useful particularly for a visually impaired person or the like, since the presence or absence of an information recording medium within the storage case can be identified from the outside based on the rising or setting of the projection piece.

## Claims

1. A storage case that is formed of a body of the storage case and a lid so that the lid is openable/closable with respect to the body of the storage case, and in the body of which an information recording medium is to be stored in a medium storage section, the storage case comprising:
a storage state determining section that allows the presence or absence of the information recording medium to be identified based on the rising or setting of a projection piece.

2. The storage case according to Claim 1, wherein the storage state determining section comprising:
a window section that is a hole provided in the outside of the body of the storage case;
a movable section turnably supported in the body of the storage case, the movable section having a contact piece formed at its front end on the medium storage section side, and having a projection piece formed at its front end on the window section side; and
a urging section for resiliently urging the contact piece of the movable section to position on the medium storage section side,
wherein, when the information recording medium is taken out of the medium storage section, the contact piece of the movable section resiliently urged by the urging section enters the medium storage section, and simultaneously the projection piece projects through the window section; and
wherein, when the information recording medium is put into the medium storage section, the contact piece of the movable section is pushed out by the information recording medium, and simultaneously the projection piece is pulled in through the window section.

3. The storage case according to Claim 2, wherein a rotating shaft is pivoted to the movable section so that the length from the rotating shaft to the contact piece is less than that from the rotating shaft to the projection piece, and wherein the moving amount of the projection piece is arranged to increase in proportion to the moving amount of the contact piece.

4. The storage case according to Claim 2 or 3, wherein the window section is provided in a side surface of the body of the storage case, on the side of the opening portion between the body of the storage case and the lid.

5. The storage case according to Claim 2 or 3, wherein the window section is provided in the side surface of the body of the storage case, on the side of the turning portion between the body of the storage case and the lid.
